# EUROPÄISCHE PATENTSCHRIFT

(11) **EP 1 347 227 B1**
(45) Veröffentlichungstag und Bekanntmachung des Hinweises auf die Patenterteilung: **31.01.2007**
(21) Anmeldenummer: 03005982.8
(22) Anmeldetag: 18.03.2003
(51) Int. Cl.: F16L 25/00

(54) **Anschlussvorrichtung für einen ringgewellten Metallschlauch**
Coupling device for corrugated metal hose
Dispositif de raccordement pour tuyau métallique flexible ondulés

(30) Priorität: 22.03.2002 DE 20204656 U; 28.06.2002 DE 20210066 U
(43) Veröffentlichungstag der Anmeldung: 24.09.2003
(73) Patentinhaber: Witzenmann GmbH, 75175 Pforzheim (DE)
(72) Erfinder: Maurer, Paul, 75181 Pforzheim (DE); Michelfelder, Bernd, Dr., 76131 Karlsruhe (DE); Seeger, Bernd, 75181 Pforzheim (DE)
(74) Vertreter: Kaiser, Magnus

(56) Entgegenhaltungen:
- EP-A- 0 717 226
- WO-A-01/98690
- US-A- 1 478 108
- US-A- 4 875 720
- US-A- 5 080 405
- US-A- 5 292 156
- US-A- 6 019 399

## Beschreibung

Die Erfindung betrifft eine Anschlussvorrichtung für einen ringgewellten Metallschlauch, umfassend insbesondere ein auf ein Ende des Metallschlauchs aufsetzbares und dieses umgreifendes Anschlussstück eine auf den Metallschlauch aufschiebbare und mit dem Anschlussstück verbindbare Überwurfmutter sowie einen beim Verbinden der Überwurfmutter mit dem Anschlussstück in ein Wellental des Metallschlauchs eingreifenden, von der Überwurfmutter direkt oder indirekt gehaltenen Haltering.

Herkömmliche Anschlusstechniken, die eine Armatur an einen ringgewellten Metallschlauch anbinden, erfordern besondere Sachkenntnis und Spezialwerkzeug bei der Montage: So gibt es beispielsweise Schweißarmaturen, bei denen eine Hülse über das anzuschließende Ende des Metallschlauchs gesteckt und mit diesem rundum verschweißt wird. Alternativ hierzu gibt es auch Lötarmaturen, die durch Löten mit dem Metallschlauch verbunden werden. Eine dritte Fügetechnik verformt das Schlauchende durch Zusammenbördeln der letzten zwei bis drei Wellen, um hierdurch einen Flansch zu bilden, an den dann eine speziell ausgebildete Armatur angeflanscht werden kann.

Diese recht aufwendigen herkömmlichen Anschlusstechniken für ringgewellte Metallschläuche erfordern Werkzeuge und Fachkenntnisse vor Ort, was den Einsatz auf Fachbetriebe beschränkt.

Eine Anschlussvorrichtung der Eingangs genannten Art, die den Montageäufwand gegenüber den eben genannten Anschlusstechniken verringert, ist beispielsweise in der US-A-6 099 046 beschrieben: Bei der dort offenbarten Anschlussvorrichtung wird zunächst eine Überwurfmutter auf den anzuschließenden ringgewellten Metallschlauch aufgeschoben. Danach wird eine Hülse auf den Metallschlauch aufgeschoben, die mit einem geteilten Haltering zusammenwirkt, dessen beiden Hälften auf die zweite Welle des Endes des Metallschlauchs seitlich aufgesetzt werden. Die Hülse dient dazu, die beiden Hälften des geteilten Halterings für den Zusammenbau der Anschlussvorrichtung zu fixieren. Zum Schluss wird ein Anschlussstück mit Außengewinde auf das Ende des Metallschlauchs aufgesetzt und die Überwurfmutter auf dieses Außengewinde aufgeschraubt. Da der Haltering eine Innenkontur aufweist, die der Außenkontur des Metallschlauchs entspricht, und in seiner eingebauten Lage in zwei Wellentäler des Metallschlauchs eingreift, ergibt sich hierdurch ein Formschluss, der den Metallschlauch in der Anschlussvorrichtung festhält.

Die Montage dieser bekannten Anschlussvorrichtung ist jedoch insbesondere aufgrund des zweiteiligen, geteilten Halterings recht umständlich. Da der Haltering in seiner Innenkontur der Außenkontur des Metallschlauchs entspricht, ist es auch unmöglich, ihn vormontiert zusammen mit der Überwurfmutter und dem Anschlussstück auf das anzuschließende Ende des Metallschlauchs aufzüschieben.

Eine aufgrund dieser Unzulänglichkeiten entwickelte alternative Anschtusstechhik ist zum Beispiel in der EP-A-1 118 811 der Anmelderin offenbart: Dort ist eine Anschlussvorrichtung mit einem Anschlussstück, einer auf das Anschlussstück aufschraubbaren Überwurfmutter und einem auf den Metallschlauch aufschiebbaren, zwischen dem Anschlussstück und der Überwurfmutter angeordneten und von diesen verformbaren, geschlossenen Ring beschrieben. Es handelt sich also um eine - bei zylindrischen Rohren an sich bekannt gewesene - Klemmringverschraubung, bei der ein entsprechend geformter und dimensionierter Klemmring zwischen dem Anschlussstück und der Überwurfmutter so verformt wird, dass er auf der Außenkrempe zumindest eines Wellenberges des Metallschlauchs klemmend sitzt und hierdurch sowohl die Anschlussvorrichtung am Metallschlauch festlegt als auch eine Dichtfunktion übernimmt. Für eine verbesserte Dichtwirkung kann es dabei vorgesehen sein, dass der Klemmring sich entlang der Außenkrempe des eingeklemmten Wellenbergs in ein benachbartes Wellental hinein verformt.

Diese eben beschriebene Anschlusstechnik ist also sehr viel einfacher zu handhaben, da der geteilte Ring wegfällt. Der Klemmring kann in seinem AusgangsZustand auf den Metallschlauch aufgeschoben werden, so dass insgesamt auch eine vormontierte Montageeinheit möglich wird, die einfach auf das anzuschließende Ende des Metallschlauchs aufzustecken ist.

Die Klemmringtechnik ist aufgrund der radialen Einleitung der zur Klemmung führenden Kräfte in die Schlauchwandung bei dünnwandigen Metallschläuchen jedoch nicht immer einsetzbar: Werden die radialen Kräfte zu groß, besteht die Gefahr eines Kollabierens der mit der Klemmkraft beaufschlagten Welle, so dass dann von definierten und reproduzierbaren Verhältnissen nicht mehr gesprochen werden kann.

Die US-A-4,875,720 offenbart demgegenüber eine weitere Anschlusstechnik ohne geteilten Ring und auch ohne Klemmring. Es wird vielmehr ein Haltering verwendet, der nach Art eines Sprengrings an einer Stelle seines Umfangs unterbrochen und verformbar ausgestaltet ist. Diese bekannte Anschlussvorrichtung besteht also im Wesentlichen aus einem Anschlussstück, einer auf den Metallschlauch aufschiebbaren Hülse mit Kulissenführung sowie dem beim Anziehen der Hülse in ein Wellental des Metallschlauchs eingreifenden, von der Hülse gehaltenen Haltering. Der Haltering kann im Ausgangszustand über den Metallschlauch geschoben werden, wohingegen er im montierten Zustand in das zweite Wellental des Metallschlauchs eingreift, wobei er beim Anziehen der Hülse im Wesentlichen entlang einer Einführschräge im Inneren des Anschlussstücks gleitet und hierbei seinen Durchmesser verringert. Aufgrund einer gegen die Krempe der zweiten Welle des Metallschlauchs wirkenden axialen Kraftkomponente hält der Haltering nach diesem Stand der Technik das Ende des Metallschlauchs an einer innen im Anschlussstück umlaufenden Schulter axial fest.

Die Abdichtung wird bei dieser aus der US-A-4,875,720 bekannten Anschlusstechnik von einer im Inneren des Anschlussstücks angeordneten, radial gegen die zweite Welle des Metallschlauchs drückenden Ringdichtung und gegebenenfalls zusätzlich durch eine an der Stirnseite des Metallschlauchendes angebrachte Weichdichtung, die gegen die innen im Anschlussstück umlaufende Schulter drückt, hergestellt. Um eine undefinierte Verformung der beiden vordersten Metallschlauchwellen zu verhindern, wird die von der Hülse auf den Haltering aufgebrachte axiale Kraft durch einen im Inneren des Anschlussstücks angebrachten, in seiner Distanz von der Schulter an die Wellengeometrie des Metallschlauchs angepassten Anschlag begrenzt.

Weitere Beispiele für bekannte Anschlussvorrichtungen sind in der US-A-1,478,108, der WO-A-01/98690, der EP-A-0 717 226 und der US-A-6,019,399 zu finden.

Angesichts dieses Standes der Technik liegt der Erfindung daher die Aufgabe zugrunde, eine universell einsetzbare, leicht zu montierende, das Ende eines ringgewellten Metallschlauchs sicher festlegende Anschlussvorrichtung zu schaffen, welche unempfindlicher gegen Verunreinigungen, Schweißnahtüberhöhungen, Grate, schräges Abschneiden des Metallschlauches oder kleinere Beschädigungen der ersten Schlauchwelle und dergleichen ist.

Gelöst ist diese Aufgabe durch eine Anschlussvorrichtung mit den Merkmalen des beigefügten Anspruchs 1.

Vorteilhafte Ausgestaltungen und Weiterbildungen der Erfindung finden sich in den Ansprüchen 2 bis 17.

Die erfindungsgemäße Anschlussvorrichtung besteht also im wesentlichen aus einem Anschlussstücks mit einem Außengewinde, einer auf den Metallschlauch, aufschiebbaren und auf das Außengewinde des Anschlussstücks aufschraubbaren Überwurfmutter sowie einem von der Überwurfmutter gehaltenen Haltering. Der Haltering kann im Ausgangszustand über den Metallschlauch geschoben werden, wohingegen er im montierten Zustand in ein Wellental des Metallschlauchs eingreift und so den Metallschlauch an der Überwurfmutter und dem Anschlussstück festlegt. Dies wird dadurch erzielt, dass der Haltering nach Art eines Sprengrings an einer Stelle seines Umfangs unterbrochen und verformbar ausgestaltet ist. Das Anschlussstück ist mit einer zur Aufnahme des Metallschlauchs vorgesehen Aufnahmebohrung versehen, die eine sich zur Öffnung hin erweiternde Einführschräge aufweist und mit einer innen umlaufenden Schulter versehen ist, wobei die Aufnahmebohrung, der Haltering und die Überwurfmutter derart zusammenwirkend ausgestaltet sind, dass der Haltering beim Aufschrauben der Überwurfmutter im wesentlichen entlang, der Einführschräge der Aufnahmebohrung gleitet und hierbei seinen Durchmesser verringert, so dass er dann in ein Wellental des Metallschlauchs eingreift. Da der Haltering offen ist, setzt er dieser Verformung keinen großen Widerstand entgegen. Gleichzeitig besteht er jedoch nur aus einem einzigen Teil, so dass die ümständliche Handhabung eines geteilten Rings entfällt. Der Haltering kann zum Montieren der erfindungsgemäßen Anschlussvorrichtung ganz einfach wie ein geschlossener Ring auf den Metallschlauch aufgeschoben werden, ohne dass er gleich wieder herunterfällt. Die Ausgestaltung des Halterings nach Art eines Sprengrings eliminiert also den Nachteil der umständlichen Handhabung eines geteilten Halterings ebenso wie den Nachteil der Einleitung von radial auf den Metallschlauch wirkenden Kräften bei der Klemmringtechnik. Die erfindüngsgemäße Anschlussvorrichtung lässt sich vielmehr so leicht montieren, wie die bekannte Klemmringverschraubung, wobei gleichzeitig die Sicherheit und Robustheit der bekannten Anschtussvörrichtung mit geteiltem Haltering beibehalten wird.

Erfindungsgemäß sind nun die verschiedenen zusammenwirkenden Teile der Anschlussvorrichtung so ausgestaltet, dass der Haltering beim Aufschrauben der Überwurfmutter und beim Verringern seines Durchmessers gegen die Krempe der vordersten Welle des Metallschlauchs aufläuft und diese durch im wesentlichen axiale Krafteinleitung gegen die umlaufende Schulter drückt und zwar vorzugsweise so, dass sich die vorderste Welle verformt, wobei sich ein Bördel ergibt, der axial gegen die umlaufende Schulter gedrückt wird. Durch die hierbei möglichen hohen axialen Kräfte ist die erfindungsgemäße Anschlussvorrichtung unempfindlich gegen Verunreinigungen, Schweißnahtüberhöhungen, Grate, schräges Abschneiden des Metallschlaüches oder kleinere Beschädigungen der ersten Schlauchwelle.

Aufgrund der axialen Krafteinleitung sind sehr hohe Flächenpressungen an der umlaufenden Schulter des Anschlussstücks möglich, ohne die Stabilität des Metallschlauchs zu gefährden. Dies kann vorzugsweise zur Herstellung einer metallischen Dichtung zwischen dem Metallschlauch und dem Anschlussstück führen. Dies schließt selbstverständlich andere Arten einer Dichtung nicht aus: Beispielsweise kann die umlaufende Schulter mit einem Elastomer, wie EPDM oder Silikon beschichtet sein. Eine Beschichtung der umlaufenden Schulter zur Optimierung einer metallischen Dichtung mit einer weichen Metallschicht, wie z. B. Lot, ist ebenfalls denkbar. Des weiteren kann auch ein metallischer Dichtring eingelegt werden, der zusätzlich beschichtet sein kann.

Die umlaufende Schulter in der Aufnahmebohrung kann außerdem mit Dichtkanten versehen sein, um insbesondere die metallische Dichtung zwischen dem Metallschlauch und dem Anschlussstück noch zu verbessern.

Die metallische Dichtung bietet allerdings gegenüber Weichdichtungen Vorteile, da gerade Metallschläuche sich optimal zur Förderung von aggressiven oder sehr heißen Fluiden, gegebenenfalls mit harten Temperatur- und Dehnungslastwechseln eignen. Der Ort der erfindungsgemäß herstellbaren Dichtung ist in diesem Zusammenhang sehr vorteilhaft, da nur wenige Teile der Anschlussvorrichtung mit dem im Metallschlauch geführten Medium in Berührung kommen; insbesondere der Haltering wird diesem Medium nicht ausgesetzt.

Der Haltering ist zweckmäßigerweise so dimensioniert, dass er bei aufgeschraubter Überwurfmutter in seinem in ein Wellental des Metallschlauchs eingreifenden, montierten Zustand im wesentlichen geschlossen ist. Hierdurch wird sichergestellt, dass die axiale Krafteinleitung in die vorderste Welle des Metallschlauchs auf deren gesamtem Umfang konstant ist. Bei einem noch geöffneten Sprengring könnte möglicherweise die axiale Kraft auf die vorderste Schlauchwelle an dem Ort, an dem der Sprengring geöffnet ist, für eine metallische Dichtung nicht ausreichend sein.

Weitere erhebliche Vorteile ergeben sich, wenn der Haltering federelastisch verformbar und so dimensioniert ist, dass sein Innendurchmesser im Ausgangszustand geringfügig kleiner als der Außendurchmesser der Wellen des Metallschlauchs ist. Hierdurch ist der Haltering auf den Metallschlauch mit geringem Widerstand aufschiebbar, wobei er aufgrund seiner federelastischen Eigenschaften sogleich in das erste Wellental einrastet. Es liegt auf der Hand, dass sich hierdurch die Montage vereinfacht. Insbesondere ermöglicht dies jedoch eine besonders einfach zu handhabende vormontierte Anschlussvorrichtung: Wenn die erfindungsgemäße Anschlussvorrichtung als Montageeinheit vormontiert ist, muss sie dann nur noch auf das anzuschließende Ende des Metallschlauchs aufgesteckt werden, wobei der Haltering dann von selbst spürbar und hörbar in das erste Wellental des Metallschlauchs einrastet, so dass zum einen der Monteur weiß, dass er die Anschlussvorrichtung richtig aufgesetzt hat und er nur noch die Überwurfmutter anziehen muss, und zum anderen eine gewisse Sicherung gegen Herausrutschen des Metallschlauchs aus der Anschlussvorrichtung gegeben ist.

Ferner bewirkt dieses Einrasten des Halterings eine Vorpositionierung für seine definierte Verformung in ein Wellental beim Aufschrauben der Überwurfmutter. Eine ungewollte radiale Verformung von Wellenkrempen des Metallschlauchs ist hierdurch sicher ausgeschlossen.

Eine federelastisch verformbare Ausbildung des Halterings ermöglicht nebenbei auch, die erfindungsgemäße Anschlussvorrichtung leicht wieder zu lösen und gegebenenfalls nochmals zu verwenden, da sich keinerlei dauerhafte Verformung der einzelnen Bauteile einstellt.

Der Haltering kann ein in seinen Abmessungen passend zum Metallschlauch gewählter, handelsüblicher Runddraht-Sprengring sein, so dass die erfindungsgemäße Anschlussvorrichtung neben ihrer leichten und sicheren Anwendbarkeit auch kostengünstig herzustellen ist.

Vorzugsweise ist der Haltering in seinem Querschnitt den Abmessungen eines Wellentals des Metallschlauchs angepasst. Dies ist besonders wichtig bei bisher nur schwer zu montierenden Metallschläuchen mit flachen und breiten Außenkrempen bei gleichzeitig nur schmalen Wellentälern.

Die Einführschräge der Aufnahmebohrung des Anschlussstücks ist vorzugsweise als Konus ausgestaltet, an dem der Haltering beim Aufschrauben der Überwurfmutter entlanggleitet, wodurch er seinen Durchmesser verringert und sich schließt.

Weitere Vorteile ergeben sich, wenn zwischen dem Haltering und der Überwurfmutter eine auf den Metallschlauch aufschiebbare Hülse zur Übertragung der axialen Kraft von der Überwurfmutter auf den Haltering angeordnet ist. Diese Kraftübertragungshülse ermöglicht, dass die Überwurfmutter nicht speziell für den vorliegenden Anwendungsfall hergestellt werden muss, sondern handelsübliche Überwurfmuttern eingesetzt werden können. Die Hülse ist zweckmäßigerweise so ausgebildet, dass sie den Haltering im wesentlichen mittig trifft und mit diesem zusammen in die Aufnahmebohrung des Anschlussstücks hinein geschoben werden kann. Dort hat sie dann, soweit sie breit genug ausgebildet ist und infolgedessen mehrere Wellenkrempen überspannt, eine stabilisierende Funktion auf den sicheren Halt des Metallschlauchs im Anschlussstück. Ferner kann die Hülse das Mitdrehen des Metallschlauchs beim Anziehen der Überwurfmutter aufgrund der mehrfachen gegenseitigen Verdrehmöglichkeiten verhindern, was weitere erhebliche Vorteile mit sich bringt.

Die Einführschräge kann im einfachsten Fall als Aufweitung der Aufnahmebohrung ausgebildet sein. Hierbei sind die verschiedensten Maßnahmen denkbar, unter anderem eine konische Ausformung der Aufnahmebohrung selbst oder eine konvex bzw. konkav gewölbte Fläche. Im Sinne einer kostengünstigen Herstellbarkeit ist es jedoch zweckmäßig, wenn die Aufnahmebohrung so ausgestaltet ist, dass sie einen zylindrischen inneren Abschnitt und einen zylindrischen Einführabschnitt umfasst, welche beiden Abschnitte durch eine kegelstumpfförmige Aufweitung verbunden sind. Der Haltering kann also zum Beginn der Montage in den zylindrischen Einführabschnitt der Aufnahmebohrung eingesetzt werden, wobei er dann beim Aufschrauben der Überwurfmutter entlang des kegelstumpfförmigen Abschnitts gleitet, sich dabei schließt und in das vorgesehene Wellental des Metallschlauchs eingreift, wonach er dann beim weiteren Aufschrauben der Überwurfmutter vom inneren zylindrischen Abschnitt der Aufnahmebohrung im geschlossenen Zustand gehalten wird, so dass er eine rein axial wirkende Kraft auf die vor ihm liegende Wellenkrempe aufbringen kann.

Besondere Vorteile ergeben sich dann, wenn die Einführschräge alternativ als seitliche Begrenzung einer in der Wandung der Aufnahmebohrung vorgesehenen Nut ausgestaltet ist, wobei diese Nut vorzugsweise so dimensioniert ist, dass sie den Haltering im Ausgangszustand aufnehmen kann. Hierdurch ergibt sich also eine besonders einfache und insbesondere im Zusammenhang mit der zusätzlichen aufschiebbaren Hülse vorteilhafte Ausgestaltung der erfindungsgemäßen Anschlussvorrichtung. Der in die Nut in der Aufnahmebohrung eingelegte Haltering verringert die zu handhabenden Einzelteile dadurch, dass er praktisch unverlierbar in der Nut sitzt und insofern nicht separat gehandhabt werden muss. Das Anschlussstück mit dem Haltering kann dann einfach auf den Metallschlauch aufgesteckt werden, wobei der Haltering von selbst im vorgesehenen Wellental zu liegen kommt und dort aufgrund seiner bevorzugten Dimensionierung einrastet. Der öffnungsseitig neben der Nut liegende äußere Abschnitt der Aufnahmebohrung dient bei der Verwendung einer zusätzlichen Kraftübertragungshülse als Zentrierungshilfe für dieselbe und stützt sie insbesondere in ihrer Einbaulage ab, wenn die erfindungsgemäße Anschlussvorrichtung als bereits vormontierte Einheit verwendet wird. Gleichzeitig stellt dieser äußere Abschnitt der Aufnahmebohrung eine zentrierende Führung des Metallschlauchs beim Aufsetzen des Anschlussstückes sicher.

Die Erfindung stellt also eine Anschlussvorrichtung zur Verfügung, die sehr einfach zu montieren ist, insbesondere als vormontierte Einheit montiert werden kann, und dennoch eine sichere und gegebenenfalls metallisch dichtende Anbindung eines Metallschlauchs herstellt, wobei sie relativ unempfindlich gegen hohe, auf die Überwurfmutter wirkende Anzugsdrehmomente ist.

Zum Anbringen der erfindungsgemäßen Anschlussvorrichtung muss lediglich der Metallschlauch durch Ablängen in einem Wellental auf die gewünschte Länge gekürzt und die Anschlussvorrichtung auf den Metallschlauch aufgeschoben bzw. aufgesteckt werden, wonach die Montage mit einfachsten Hilfsmitteln, nämlich einem Maulschlüssel oder einer entsprechenden Zange, hergestellt werden kann. Das Aufschrauben der Überwurfmutter auf das Anschlussstück verursacht vorzugsweise ein Umbördeln der vordersten Welle des Metallschlauchs, wobei gegebenenfalls eine federelastische, einrastende Ausbildung des Halterings von selbst die optimale Ausgangslage des Metallschlauchs im Anschlussstück herstellt. Durch Abschrauben der Überwurfmutter kann die Verbindung bei Bedarf auf ebenso einfache Weise wieder gelöst werden.

Zwei Ausführungsbeispiele der Erfindung sind im folgenden anhand der beigefügten Zeichnungen beschrieben und näher erläutert. Es zeigen:
- Figur 1: eine teilgeschnittene Seitenansicht einer auf einen Metallschlauch aufgesteckten vormontierten Anschlussvorrichtung nach der Erfindung;
- Figur 2: die Anschlussvorrichtung nach Figur 1 beim Aufschrauben der Überwurfmutter;
- Figur 3: die Anschlussvorrichtung aus Figur 1 in ihrer montierten Endposition;
- Figur 4: die Anschlussvorrichtung aus den Figuren 1 bis 3 nach dem Lösen der Verbindung;
- Figur 5: eine Draufsicht auf den Haltering in seinem Ausgangszustand;
- Figur 6: eine Draufsicht auf den Haltering in montiertem Zustand;
- Figur 7: eine teilgeschnittene Seitenansicht eines Anschlussstücks eines anderen Ausführungsbeispiels einer erfindungsgemäßen Anschlussvorrichtung.
- Figur 8: eine teilgeschnittene Seitenansicht einer auf einen Metallschlauch aufgesteckten vormontierten Anschlussvorrichtung gemäß dem Ausführungsbeispiel aus Figur 7;
- Figur 9: die Anschlussvorrichtung aus Figur 8 beim Aufschrauben der Überwurfmutter;
- Figur 10: die Anschlussvorrichtung aus Figur 8 in ihrer montierten Endposition.

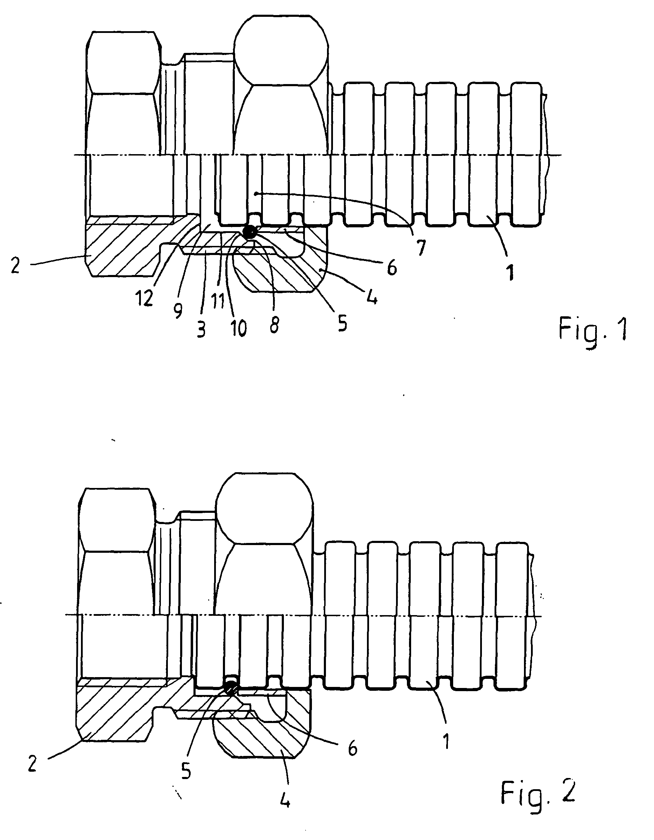

Figur 1 zeigt die erste Phase beim Anbringen einer erfindungsgemäßen Anschlussvorrichtung an einen speziellen, mit flachen und breiten Außenkrempen versehenen ringgewellten Metallschlauch 1 in einer teilgeschnittenen Seitenansicht. Die Anschlussvorrichtung besteht aus einem Anschlussstück 2 mit einem Außengewinde 3, einer in das Außengewinde 3 eingreifenden Überwurfmutter 4, einem zwischen dem Anschlussstück 2 und der Überwurfmutter 4 angeordneten, verformbaren Haltering 5 und einer zwischen dem Haltering 5 und der Überwurfmutter 4 angeordneten Hülse 6. Es handelt sich hier um eine vormontierte Montageeinheit, die einfach auf das Ende des Metallschlauchs 1 aufgesteckt wurde. Die Überwurfmutter 4 und die Hülse 6 zentrieren den Metallschlauch 1 im Anschlussstück 2, wobei der Haltering 5, der als federelastischer Runddraht-Sprengring ausgeführt ist und einen Innendurchmesser aufweist, der kleiner ist als der Außendurchmesser des Metallschlauchs 1, in das erste Wellental 7 des Metallschlauchs 1 eingerastet ist und dem Monteur anzeigt, dass die Anschlussvorrichtung bereit zur Montage ist. Der Haltering 5 sitzt hierbei in einem zylindrischen Einführabschnitt 8 einer Aufnahmebohrung 9 im Anschlussstück 2, der über eine als kegelstumpfförmiger Konus ausgebildete Einführschräge 10 in einen inneren zylindrischen Abschnitt 11 der Aufnahmebohrung 9 übergeht.

Durch einfaches Aufschrauben der Überwurfmutter 4 auf das Außengewinde 3 des Anschlussstücks 2 verändert sich die Anschlussvorrichtung wie in Figur 2 gezeigt: Die Überwurfmutter 4 verlagert sich in Richtung des Anschlussstücks 2, wodurch über die Hülse 6 eine axiale Kraft auf den Haltering 5 aufgebracht wird. Die Hülse, die gegenüber der Überwurfmutter 4 ein separates Teil ist, verhindert hierbei, dass der Metallschlauch 1 auf Torsion belastet wird. Die axiale Krafteinleitung führt dazu, dass der Haltering 5 entlang der konischen Einführschräge 10 gleitet und sich hierbei schließt, d. h. sich in seinem Durchmesser verkleinert und infolgedessen in das Wellental 7 eintaucht.

Wie anhand Figur 2 gut zu sehen ist, läuft die vordere Stirnseite des Halterings 5 gegen die Außenkrempe der vordersten Welle des Metallschlauchs 1 auf und drückt diese gegen eine umlaufende Schulter 12 in der Aufnahmebohrung 9, wobei er den Metallschlauch 1 mit in die Aufnahmebohrung 9 hineinzieht. Der Umfang des als Sprengring ausgestalteten Halterings 5 ist dabei so bemessen, dass er sich in der in Figur 2 gezeigten Position, in der er vom inneren zylindrischen Abschnitt 11 der Aufnahmebohrung 9 gehalten wird, vollständig geschlossen ist.

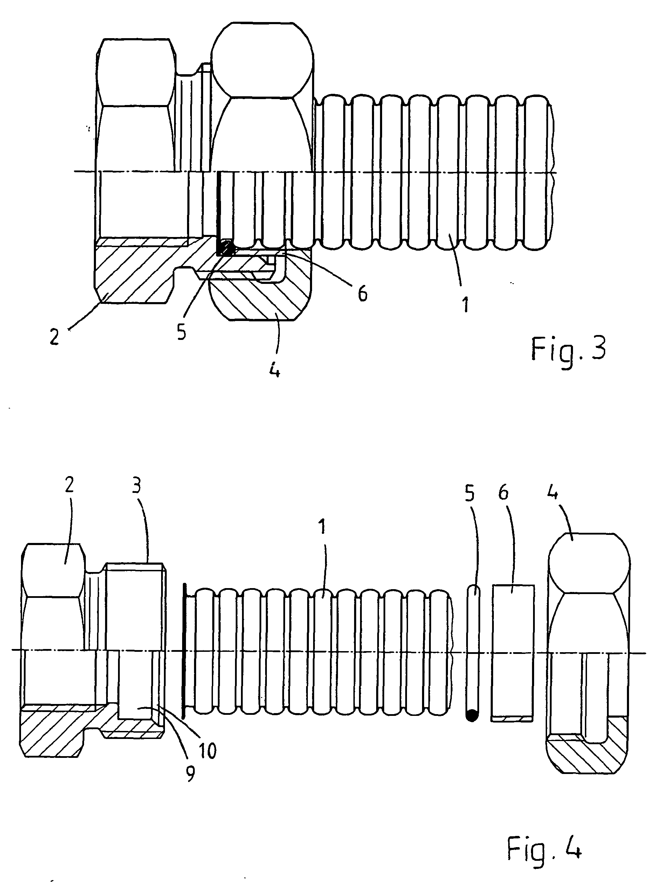

Durch weiteres Anziehen der Überwurfmutter 4 wird die erste Schlauchwelle, wie in Figur 3 gezeigt, umgebördelt und gegen die umlaufende Schulter 12 im Anschlussstück 2 unter Ausbildung einer metallischen Dichtung mit sehr hohen Flächenpressungen gedrückt. Wie hier gut zu erkennen ist, dient die Hülse 6 hier nicht nur zur Übertragung der axialen Kräfte von der Überwurfmutter 4 auf den Haltering 5, sondern auch zur Stabilisierung des Metallschlauchs 1 im Anschlussstück 2, da sie zwei Wellen überspannt. Der zylindrische innere Abschnitt 11 der Aufnahmebohrung 9 ist hierbei so bemessen, dass die Hülse 6 passend in der Aufnahmebohrung 9 sitzt. Man erhält im Ergebnis eine sehr stabile und dichte Anbindung des Anschlussstücks 2 an dem Metallschlauch 1.

Wie Figur 4 zeigt, lässt sich die in Figur 3 gezeigte Anschlussvorrichtung durch Abschrauben der Überwurfmutter 4 leicht wieder lösen und in seine Einzelteile, nämlich das Anschlussstück 2, den Haltering 5, der sich aufgrund seiner federelastischen Eigenschaften wieder ausgedehnt hat und leicht vom Metallschlauch 1 abzuziehen ist, die Hülse 6 und die Überwurfmutter 4, zerlegen. Der Metallschlauch 1 weist noch eine umgebördelte erste Schlauchwelle auf. Die Teile der Anschlussvorrichtung können ohne weiteres nochmals verwendet werden.

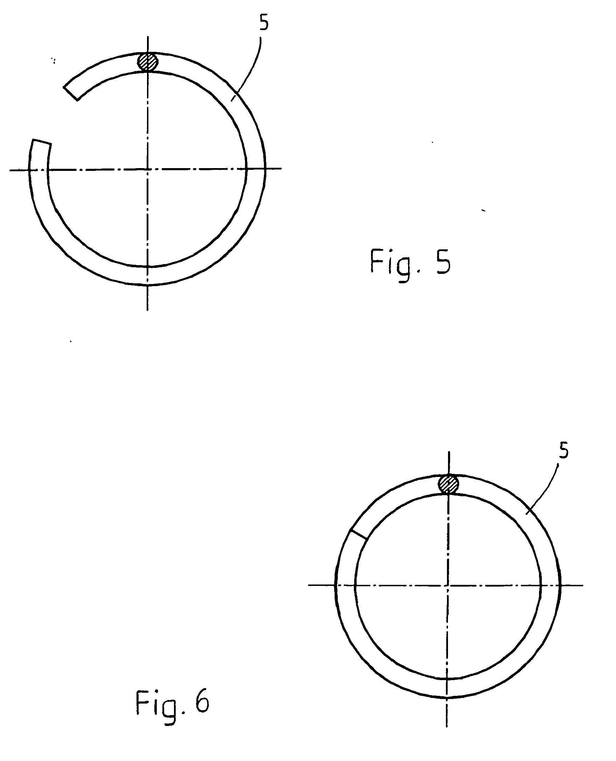

Die Figuren 5 und 6 verdeutlichen nochmals in Draufsicht, dass der Haltering 5, der bei dem in den Zeichnungen dargestellten Ausführungsbeispiel verwendet wird, als Runddraht-Sprengring ausgestaltet ist. Figur 5 zeigt hierbei den geöffneten Ausgangszustand des Halterings 5, wohingegen Figur 6 den geschlossenen Haltering 5 in der in den Figuren 2 und 3 dargestellten Montagesituation zeigt. Aufgrund seiner federelastischen Eigenschaften kehrt der Haltering 5 nach Lösen der Anschlussvorrichtung wieder in seinen in Figur 5 gezeigten Ausgangszustand zurück.

Wie bereits zuvor erwähnt, weist der Haltering 5 in seinem in Figur 5 gezeigten Ausgangszustand einen Innendurchmesser auf, der geringfügig kleiner ist als der Außendurchmesser der Wellenaußenkrempen des Metallschlauchs 1, so dass er, wie in Figur 1 gezeigt, spürbar und hörbar in das erste Wellental des Metallschlauchs 1 einrastet und dem Monteur infolgedessen die richtige Ausgangsposition der Anschlussvorrichtung zum Anziehen der Überwurfmutter 4 anzeigt.

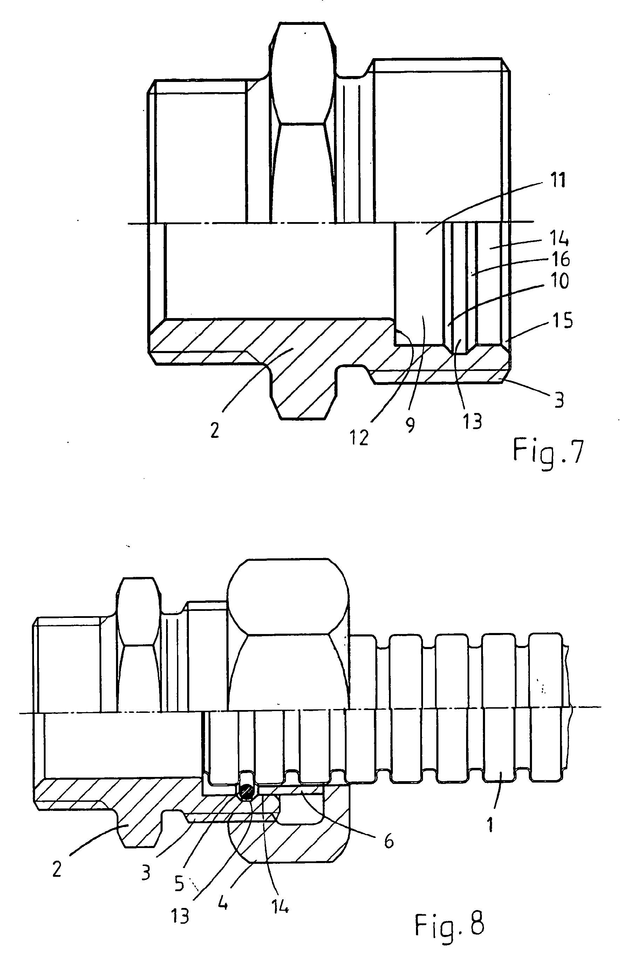

Figur 7 zeigt in einer ähnlichen Darstellung wie Figur 1 - jedoch ohne die Überwurfmutter 4, den Haltering 5, die Hülse 6 und den Metallschlauch 1 zu zeigen - ein Anschlussstück 2 eines anderen Ausführungsbeispiels nach der Erfindung. Die Unterschiede zu dem in den Figuren 1 bis 6 dargestellten Ausführungsbeispiel sind nur im Anschlussstück 2 zu finden, so dass sich die Darstellung von Figur 7 hierauf beschränkt. Die Einführschräge 10 ist hier zwar wiederum als kegelstumpfförmige, sich nach außen aufweitende Fläche ausgebildet, jedoch sitzt diese nicht mehr zwischen einem inneren Abschnitt 11 und einem Einführabschnitt 8 der Aufnahmebohrung 9, sondern bildet eine Seitenwand einer Nut 13, die den (hier nicht dargestellten) Haltering 5 in seinem Ausgangszustand aufnimmt. Es ist unmittelbar einsichtig, dass die Anordnung des Halterings 5 in der Nut 13 den Vorteil bietet, dass der Haltering 5 nicht einzeln gehandhabt werden muss, sondern von vornherein mehr oder weniger fest im Anschlussstück 2 gehalten wird. Die Nut 13 teilt nunmehr die Aufnahmebohrung 9 in einen zylindrischen inneren Abschnitt 11 und einen zylindrischen äußeren Abschnitt 14 gleichen Durchmessers, welcher die Stabilität der Anschlussvorrichtung bei der Montage auf einem Metallschlauch 1 erheblich verbessert, indem er den Metallschlauch 1 und insbesondere die Hülse 6 führt und zentrierend hält. Dies gilt insbesondere dann, wenn die Anschlussvorrichtung bereits vormontiert ist und die Überwurfmutter 4 bereits so weit auf das Außengewinde 3 des Anschlussstücks 2 aufgeschraubt ist, dass die Hülse 6 einerseits an die Überwurfmutter 4 und andererseits an den in der Nut 13 sitzenden Haltering 5 angrenzend festgehalten wird. Öffnungsseitig weist die Aufnahmebohrung 9 bzw. deren äußerer Abschnitt 14 noch einen Einführkonus 15 auf, der das Aufstecken auf den Metallschlauch 1 erleichtert.

Wie an Hand Figur 7 leicht zu erkennen ist, ist die Nut 13 im dargestellten Ausführungsbeispiel nicht nur durch die Einführschräge 10 abgeflacht, sondern auch öffnungsseitig mit einer entsprechend abgeschrägten Nutwand versehen, die eine Ausziehschräge 16 darstellt. Diese Ausziehschräge 16 erleichtert die Demontage einer montierten Anschlussvorrichtung dann, wenn der Metallschlauch 1 durch axiale Krafteinleitung gegen die Schulter 12 des Anschlussstücks 2 umgebördelt worden ist. Denn dann kann der Haltering 5 in aller Regel nicht in der Nut 13 verbleiben, wenn der Metallschlauch 1 mit Bördel aus dem Anschlussstück 2 herausgezogen werden soll. Er wird vielmehr mit Hilfe der Ausziehschräge 16 mit aus dem Anschlussstück 2 herausgezogen. Durch einfaches Wiederaufstecken des Anschlussstückes 2 und Aufschrauben der Überwurfmutter 4 kann der Metallschlauch 1 ohne weiteres wieder an der erfindungsgemäßen Anschlussvorrichtung montiert werden.

An Hand Figur 8 ist die Funktionsweise des in Figur 7 dargestellten weiteren Ausführungsbeispiels deutlicher zu erkennen, da hier auch die Überwurfmutter 4, der Haltering 5, die Hülse 6 und der Metallschlauch 1 dargestellt sind. An Hand dieser Darstellung wird augenscheinlich, dass der Metallschlauch 1 schon im vormontierten Zustand sehr stabil im Anschlussstück 2 gehalten wird, da die Hülse 6 im zylindrischen äußeren Abschnitt 14 des Anschlussstücks 2 geführt wird und von der Überwurfmutter 4 gehalten ist, so dass der Metallschlauch 1 über nahezu drei Wellen hinweg gehalten wird. Der Haltering 5 sitzt in der Nut 13 und findet dort ebenfalls ausreichend Halt.

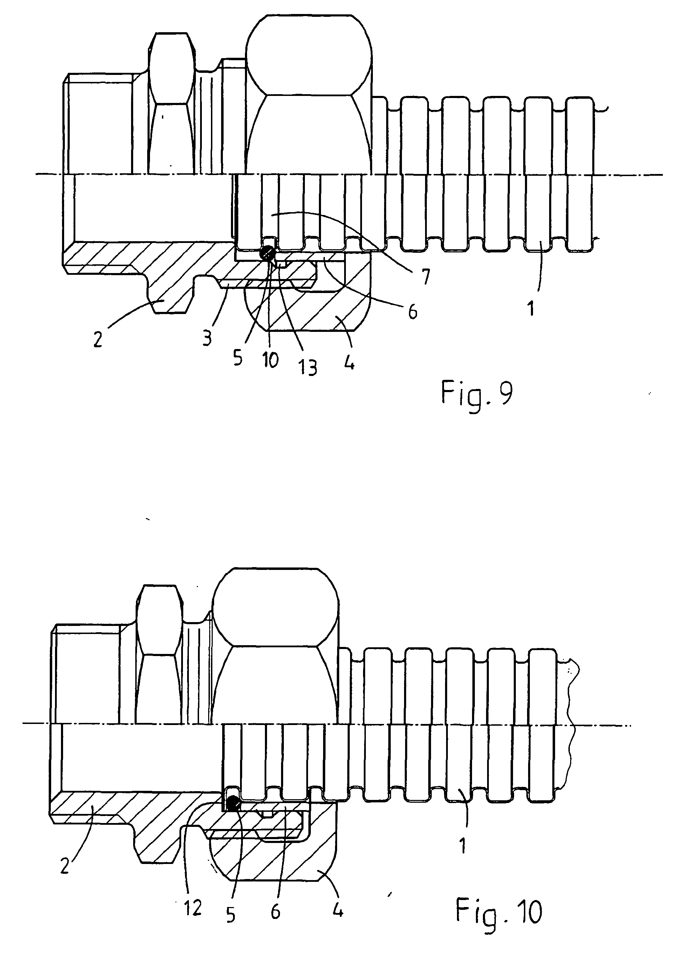

Figur 9 zeigt die Anschlussvorrichtung aus Figur 8 beim Aufschrauben der Überwurfmutter 4. Wie hier zu erkennen ist, verschiebt die Überwurfmutter 4 den Haltering 5 mittels der Hülse 6 axial in das Anschlussstück 2 hinein, wobei der Haltering 5 entlang der Einführschräge 10 gleitet, hierbei seinen Durchmesser verringert und in das Wellenteil 7 eingreift. Die Hülse 6 wird weiterhin durch den zylindrischen äußeren Abschnitt 14 geführt.

In Figur 10 ist dargestellt, wie die Anschlussvorrichtung aussieht, wenn die Überwurfmutter 4 vollständig auf das Anschlussstück 2 aufgeschraubt ist. Wie beim oben beschriebenen ersten Ausführungsbeispiel wurde die erste Schlauchwelle umgebördelt und gegen die umlaufenden Schulter 12 im Anschlussstück 2 unter Ausbildung einer metallischen Dichtung mit sehr hohen Flächenpressungen gedrückt.

Abschließend sei erwähnt, dass als Metallschlauch auch ein Metallbalg verwendet werden kann, ohne den Umfang der Erfindung zu verlassen. Das Wort "Metallschlauch" ist in den nachfolgenden Schutzansprüchen also insofern umfassend zu verstehen, als auch Metallbälge innerhalb des Wortsinns liegen.

### Bezugszeichenliste

- 1: Metallschlauch
- 2: Anschlussstück
- 3: Außengewinde
- 4: Überwurfmutter
- 5: Haltering
- 6: Hülse
- 7: Wellental
- 8: Einführabschnitt
- 9: Aufnahmebohrung
- 10: Einführschräge
- 11: innerer Abschnitt
- 12: Schulter
- 13: Nut
- 14: Äußerer Abschnitt
- 15: Einführkonus
- 16: Ausziehschräge

## Patentansprüche

1. Anschtussvörrichtung für einen ringgewellten Metallschlauch, umfassend ein auf ein Ende des Metallschlauchs (1) aufsetzbares und dieses umgreifendes Anschlussstück (2) mit einem Außengewinde (3), eine auf den Metallschlauch (1) aufschiebbare und auf das Außengewinde (3) des Anschlussstücks (2) aufschraubbare Überwurfmutter (4) sowie einen beim Aufschrauben der Überwurfmutter (4) in ein Wellental des Metallschlauchs (1) eingreifenden, von der Überwurfmutter (4) gehaltenen Haltering (5),
wobei der Haltering (5) nach Art eines Sprengrings an einer Stelle seines Umfangs unterbrochen und derart verformbar.ausgestaltet ist, dass er in seinem Ausgangszustand auf den Metallschlauch (1) aufschiebbar ist,
wobei das Anschlussstück (2) mit einer zur Aufnahme des Metallschlauchs (1) vorgesehenen Aufnahmebohrung (9) versehen ist, die eine sich zur Öffnung hin erweiternde Einführschräge (10) aufweist, wobei die Aufnahmebohrung (9) des Anschlussstücks (2) mit einer innen umlaufenden Schulter (12) versehen ist,
und wobei die Aufnahmebohrung (9), der Haltering (5) und die Überwurfmutter (4) derart zusammenwirkend ausgestaltet sind, dass der Haltering (5) beim Aufschrauben der Überwurfmutter im wesentlichen entlang der Einführschräge (10) der Aufnahmebohrung (9) gleitet und hierbei seinen Durchmesser verringert, so dass er in ein Wellental des Metallschlauchs (1) eingreift, und dass er mit seiner vorderen Stirnseite gegen die Krempe der vordersten Welle des Metallschlauchs (1) aufläuft und diese durch im wesentlichen axiale Krafteinleitung gegen die umlaufende Schulter (12) drückt.

2. Anschlussvorrichtung nach Anspruch 1,
**dadurch gekennzeichnet,**
**dass** die umlaufende Schulter (12) des Anschlussstücks (2), der Haltering (5) und die Überwurfmutter (5) so zusammenwirkend ausgestaltet sind, dass der Haltering (5) beim Aufschrauben der Überwurfmutter (4) die vorderste Welle des Metallschlauchs (1) unter Ausbildung einer metallischen Dichtung gegen die umlaufende Schulter (12) bördelt.

3. Anschlussvorrichtung nach einem der Ansprüche 1 oder 2,
**dadurch gekennzeichnet,**
**dass** die umlaufende Schulter (12) mit einer weichen Metallschicht oder einem Elastomer beschichtet ist.

4. Anschlussvorrichtung nach einem der Ansprüche 1 bis 3,
**dadurch gekennzeichnet,**
**dass** die umlaufende Schulter (12) mit Dichtkanten versehen ist.

5. Anschlussvorrichtung nach einem der Ansprüche 1 bis 4,
**dadurch gekennzeichnet,**
**dass** ein zwischen die umlaufende Schulter (12) und den Metallschlauch (1) einzulegender metallischer Dichtring vorgesehen ist.

6. Anschlussvorrichtung nach einem der Ansprüche 1 bis 5,
**dadurch gekennzeichnet,**
**dass** der Haltering (5) so dimensioniert ist, dass er bei aufgeschraubter Überwurfmutter (4) in seinem in ein Wellental des Metallschlauchs (1) eingreifenden, montierten Zustand im wesentlichen geschlossen ist.

7. Anschlussvorrichtung nach einem der Ansprüche 1 bis 6,
**dadurch gekennzeichnet,**
**dass** der Haltering (5) federelastisch verformbar und so dimensioniert ist, dass sein Innendurchmesser im Ausgangszustand geringfügig kleiner als der Außendurchmesser der Wellen des Metallschlauchs (1) ist.

8. Anschlussvorrichtung nach einem der Ansprüche 1 bis 7,
**dadurch gekennzeichnet,**
**dass** der Haltering (5) ein Runddraht-Sprengring ist.

9. Anschlussvorrichtung nach einem der Ansprüche 1 bis 8,
**dadurch gekennzeichnet,**
**dass** der Querschnitt des Halterings (5) den Abmessungen eines Wellentals (7) des Metallschlauchs (1) angepasst ist.

10. Anschlussvorrichtung nach einem der Ansprüche 1 bis 9,
**dadurch gekennzeichnet,**
**dass** die Einführschräge (10) der Aufnahmebohrung (9) des Anschlussstücks (2) als Konus ausgestaltet ist.

11. Anschlussvorrichtung nach einem der Ansprüche 1 bis 10,
**dadurch gekennzeichnet,**
**dass** zwischen dem Haltering (5) und der Überwurfmutter (4) eine auf den Metallschlauch (1) aufschiebbare Hülse (6) zur Übertragung der axialen Kraft von der Überwurfmutter (4) auf den Haltering (5) angeordnet ist.

12. Anschlussvorrichtung nach Anspruch 11,
**dadurch gekennzeichnet,**
**dass** das Anschlussstück (2) und die Hülse (6) so ausgestaltet sind, dass die Hülse (6) zusammen mit dem Metallschlauch (1) in zumindest einen Teil der Aufnahmebohrung (9) hinein geschoben werden kann.

13. Anschlussvorrichtung nach einem der Ansprüche 1 bis 12,
**dadurch gekennzeichnet,**
**dass** sie als in ihrem Ausgangszustand vormontierte, auf ein Ende des Metallschlauchs (1) aufsteckbare Montageeinheit ausgebildet ist.

14. Anschlussvorrichtung nach einem der Ansprüche 1 bis 13,
**dadurch gekennzeichnet,**
**dass** die Einführschräge (10) als Aufweitung der Aufnahmebohrung (9) ausgebildet ist.

15. Anschlussvorrichtung nach einem der Ansprüche 1 bis 13,
**dadurch gekennzeichnet,**
**dass** die Aufnahmebohrung (9) einen zylindrischen inneren Abschnitt (11) und einen zylindrischen Einführabschnitt (8) umfasst, welche beiden Abschnitte (8, 11) durch eine kegelstumpfförmige Einführschräge (10) verbunden sind.

16. Anschlussvorrichtung nach einem der Ansprüche 1 bis 13,
**dadurch gekennzeichnet,**
**dass** die Einführschräge (10) als seitliche Begrenzung einer in der Wandung der Aufnahmebohrung (9) vorgesehenen Nut (13) ausgebildet ist.

17. Anschlussvorrichtung nach Anspruch 16,
**dadurch gekennzeichnet,**
**dass** die Nut (13) zur Aufnahme des Halterings (5) in seinem Ausgangszustand dient.

## Claims

1. Connecting device for a metal hose having annular corrugations, comprising a connecting piece (2) which can be placed onto one end of the metal hose (1) and engages around it and has an external thread (3), a union nut (4) which can be pushed onto the metal hose (1) and can be screwed onto the external thread (3) of the connecting piece (2) as well as a retaining ring (5) which engages in a corrugation trough of the metal hose (1) during screwing on of the union nut (4) and is retained by the union nut (4), wherein the retaining ring (5) is interrupted at a point on its circumference in the manner of a circlip and is designed to be deformable in such a way that in its initial state it can be pushed onto the metal hose (1), wherein the connecting piece (2) has a receiving bore (9) which is provided in order to receive the metal hose (1) and has a lead-in slope (10) which widens towards the opening, the receiving bore (9) of the connecting piece (2) being provided with an internal circumferential shoulder (12), and wherein the receiving bore (9), the retaining ring (5) and the union nut (4) are designed so that they co-operate in such a way that as the union nut Is screwed on the retaining ring (5) slides substantially along the lead-in slope (10) of the receiving bore (9) and in so doing reduces the diameter thereof so that it engages in a corrugation trough of the metal hose (1), and that with its front end face it runs up against the flange of the front corrugation of the metal hose (1) and presses this against the circumferential shoulder (12) by substantially axial introduction of force.

2. Connecting device as claimed in Claim 1, **characterised in that** the circumferential shoulder (12) of the connecting piece (2), the retaining ring (5) and the circlip (6) are designed to co-operate so that as the union nut (4) is screwed on the retaining ring (5) flanges round the front corrugation of the metal hose (1) forming a metal seal against the circumferential shoulder (12).

3. Connecting device as claimed in any one of Claims 1 or 2, **characterised in that** the circumferential shoulder (12) is coated with a soft metal layer or an elastomer.

4. Connecting device as claimed in any one of Claims 1 to 3, **characterised in that** the circumferential shoulder (12) is provided with sealing edges.

5. Connecting device as claimed in any one of Claims 1 to 4, **characterised in that** a metal sealing ring is provided which can be inlaid between the circumferential shoulder (12) and the metal hose (1).

6. Connecting device as claimed in any one of Claims 1 to 5, **characterised in that** the retaining ring (5) is dimensioned so that when the union nut (4) is screwed on the retaining ring is substantially closed in its installed state engaged in a corrugation trough of the metal hose (1).

7. Connecting device as claimed in any one of Claims 1 to 6, **characterised in that** the retaining ring (5) is resiliently deformable and is dimensioned so that its internal diameter in the initial state is slightly smaller than the external diameter of the corrugations of the metal hose (1).

8. Connecting device as claimed in any one of Claims 1 to 7, **characterised in that** the retaining ring (5) is a round wire circlip.

9. Connecting device as claimed in any one of Claims 1 to 8, **characterised in that** the cross-section of the retaining ring (5) is adapted to the dimensions of a corrugation trough (7) of the metal hose (1).

10. Connecting device as claimed in any one of Claims 1 to 9, **characterised in that** the lead-in slope (10) of the receiving bore (8) of the connecting piece (2) is designed as a cone.

11. Connecting device as claimed in any one of Claims 1 to 10, **characterised in that** a sleeve (6) which can be placed onto the metal hose (1) is disposed between the retaining ring (5) and the union nut (4) for transmission of the axial force from the union nut (4) onto the retaining ring (5).

12. Connecting device as claimed in Claim 11, **characterised in that** the connecting piece (2) and the sleeve (6) are designed so that the sleeve (6) together with the metal hose (1) can be pushed into at least a part of the receiving bore (9).

13. Connecting device as claimed in any one of Claims 1 to 12, **characterised in that** it is constructed as an assembly unit which is preassembled in its initial state and can be fitted onto one end of the metal hose (1).

14. Connecting device as claimed in any one of Claims 1 to 13, **characterised in that** the lead-in slope (10) is constructed as an expansion of the receiving bore (9).

15. Connecting device as claimed in any one of Claims 1 to 13, **characterised in that** the receiving bore (9) comprises a cylindrical inner portion (11) and a cylindrical lead-in portion (8), both of these portions (8, 11) being connected by a lead-in slope (10) in the shape o a truncated cone.

16. Connecting device as claimed in any one of Claims 1 to 13, **characterised in that** the lead-in slope (10) is constructed as a lateral boundary of a groove (13) provided in the wall of the receiving bore (9).

17. Connecting device as claimed in Claim 16, **characterised in that** the groove (13) serves to receive the retaining ring (5) in its initial state.

## Revendications

1. Dispositif de raccordement pour tuyau métallique flexible ondulé, comprenant une pièce de raccordement (2), pouvant être fixée à une extrémité du tuyau métallique flexible (1) et enveloppant celui-ci, et présentant un filet extérieur (3), un écrou d'accouplement (4) enfilable sur le tuyau métallique flexible (1) et vissable sur le filet extérieur (3) de la pièce de raccordement (2) ainsi qu'une bague de blocage (5) maintenue par l'écrou d'accouplement (4) et se mettant en prise dans un creux d'ondulation du tuyau métallique flexible (1) lors du vissage de l'écrou d'accouplement (4),
la bague de blocage (5) de type bague de butée étant interrompue à un endroit de sa circonférence et est conçue de manière déformable de telle sorte qu'elle est enfilable sur le tuyau métallique flexible (1) dans son état initial,
la pièce de raccordement (2) étant pourvue d'un alésage de réception (9) prévu pour recevoir le tuyau métallique flexible (1), lequel alésage présente une inclinaison d'entrée (10) s'élargissant vers l'ouverture,
l'alésage de réception (9) de la pièce de raccordement (2) étant pourvu d'un épaulement circulaire interne (12),
et l'alésage de réception (9), la bague de blocage (5) et l'écrou d'accouplement (4) étant conçus de manière à agir conjointement de sorte que, lors du vissage de l'écrou d'accouplement, la bague de blocage (5) glisse essentiellement le long de l'inclinaison d'entrée (10) de l'alésage de réception (9) et diminue ainsi son diamètre de sorte qu'elle se met en prise dans un creux d'ondulation du tuyau métallique flexible (1), et que sa face avant entre en contact avec le rebord de la première ondulation du tuyau métallique flexible (1) et ledit rebord exerce une force essentiellement axiale contre l'épaulement circulaire (12).

2. Dispositif de raccordement selon la revendication 1,
**caractérisé en ce que**
l'épaulement circulaire (12) de la pièce de raccordement (2), la bague de blocage (5) et l'écrou d'accouplement (4) sont conçus de façon à agir conjointement de sorte que, lors du vissage de l'écrou d'accouplement (4), la bague de blocage (5) sertit la première ondulation du tuyau métallique flexible (1) en formant un joint métallique contre l'épaulement circulaire (12).

3. Dispositif de raccordement selon l'une quelconque des revendications 1 ou 2,
**caractérisé en ce que**
l'épaulement circulaire (12) est revêtu d'une couche de métal doux ou d'un élastomère.

4. Dispositif de raccordement selon l'une quelconque des revendications 1 à 3,
**caractérisé en ce que**
l'épaulement circulaire (12) est pourvu d'arêtes d'étanchéité.

5. Dispositif de raccordement selon l'une quelconque des revendications 1 à 4,
**caractérisé en ce**
**qu'**une bague d'étanchéité métallique à insérer entre l'épaulement circulaire (12) et le tuyau métallique flexible (1) est prévue.

6. Dispositif de raccordement selon l'une quelconque des revendications 1 à 5,
**caractérisé en ce que**
la bague de blocage (5) est dimensionnée de telle sorte qu'elle est essentiellement fermée dans son état monté en prise dans un creux d'ondulation du tuyau métallique flexible (1) lorsque l'écrou d'accouplement (4) est vissé.

7. Dispositif de raccordement selon l'une quelconque des revendications 1 à 6,
**caractérisé en ce que**
la bague de blocage (5) est déformable élastiquement et dimensionnée de telle sorte que son diamètre interne à l'état initial est légèrement inférieur au diamètre externe des ondulations du tuyau métallique flexible (1).

8. Dispositif de raccordement selon l'une quelconque des revendications 1 à 7,
**caractérisé en ce que**
la bague de blocage (5) est un circlips en fil de section circulaire.

9. Dispositif de raccordement selon l'une quelconque des revendications 1 à 8,
**caractérisé en ce que**
la section transversale de la bague de blocage (5) est adaptée aux dimensions d'un creux d'ondulation (7) du tuyau métallique flexible (1).

10. Dispositif de raccordement selon l'une quelconque des revendications 1 à 9,
**caractérisé en ce que**
l'inclinaison d'entrée (10) de l'alésage de réception (9) de la pièce de raccordement (2) est en forme de cône.

11. Dispositif de raccordement selon l'une quelconque des revendications 1 à 10,
**caractérisé en ce qu'**
un manchon (6) enfilable sur le tuyau métallique flexible (1) est disposé entre la bague de blocage (5) et l'écrou d'accouplement (4) pour transmettre la force axiale de l'écrou d'accouplement (4) à la bague de blocage (5).

12. Dispositif de raccordement selon la revendication 11,
**caractérisé en ce que**
la pièce de raccordement (2) et le manchon (6) sont conçus de telle sorte que le manchon (6) peut être enfoncé avec le tuyau métallique flexible (1) dans au moins une partie de l'alésage de réception (9).

13. Dispositif de raccordement selon l'une quelconque des revendications 1 à 12,
**caractérisé en ce**
**qu'**il est conçu en tant qu'unité de montage pré-montée, pouvant être fixée à une extrémité du tuyau métallique flexible (1) dans son état initial.

14. Dispositif de raccordement selon l'une quelconque des revendications 1 à 13,
**caractérisé en ce que**
l'inclinaison d'entrée (10) est conçue en tant qu'évasement de l'alésage de réception (9).

15. Dispositif de raccordement selon l'une quelconque des revendications 1 à 13,
**caractérisé en ce que**
l'alésage de réception (9) comprend une partie interne cylindrique (11) et une partie d'entrée cylindrique (8), ces deux parties (8, 11) étant reliées par une inclinaison d'entrée de forme tronconique (10).

16. Dispositif de raccordement selon l'une quelconque des revendications 1 à 13,
**caractérisé en ce que**
l'inclinaison d'entrée (10) est conçue en tant que limitation latérale d'une rainure (13) prévue dans la paroi de l'alésage de réception (9).

17. Dispositif de raccordement selon la revendication 16,
**caractérisé en ce que**
la rainure (13) sert à recevoir la bague de blocage (5) dans son état initial.
